# EUROPEAN PATENT SPECIFICATION

(11) **EP 3 820 765 B1**
(45) Date of publication and mention of the grant of the patent: **26.10.2022**
(21) Application number: 19766358.6
(22) Date of filing: 08.07.2019
(51) Int. Cl.: B62K 21/18, B62K 21/20, B62K 21/24

(54) **FIXING ARRANGEMENT BETWEEN A STEERING SYSTEM AND THE FORK OF A BICYCLE**
BEFESTIGUNGSANORDNUNG ZWISCHEN EINEM LENKSYSTEM UND DER GABEL EINES FAHRRADES
DISPOSITIF DE FIXATION ENTRE UN SYSTÈME DE DIRECTION ET LA FOURCHE D'UN VÉLO

(30) Priority: 10.07.2018 IT 201800007066
(43) Date of publication of application: 19.05.2021
(73) Proprietor: HiRide Suspension S.r.l., 20122 Milan (IT)
(72) Inventor: BORGESE, Domenico, 20146 Milano (MI) (IT); CERESOLI, Luca, 24020 Ranica BG (IT); NOCE, Fabio, 22070 Luisago CO (IT)
(74) Representative: Soldatini, Andrea
(86) International application number: PCT/IB2019/055792
(87) International publication number: WO 2020/012325

(56) References cited:
- US-A1- 2008 157 502
- US-B2- 9 981 713

## Description

### Technical field of the invention

The present invention is in connection with the field of the cycling industry, and in particular it refers to a steering system for a bicycle, more specifically to a fixing arrangement between the steering system and the fork of the bicycle. The fixing arrangement according to the invention is advantageously, but not necessarily, adapted for association with a suspension of the single-stem type adapted to be arranged inside the steering head tube and specially conceived, thanks to its compactness, to equip road "racing" bikes.

### Background of the invention

In road bicycles, for instance and in particular the so-called "racing" bikes (a category that includes not only the bikes designed to true racing, but also those conceived to support medium- or long-range rides at relatively fast speed in a sportive/amateur or simply touristic context), the need for reducing the weight and bulk of the vehicle is strongly felt, because these factors particularly affect the objective and perceived performance of this kind of bikes.

Considering this design constraint, the manufacturers in this field are nevertheless called to face the problem of a comfortable use of the bike, and in this connection to provide the vehicle with suspension systems (i.e. spring-damper units). In other types of bicycles, in particular the mountain bikes, the above cited constraint is less severe, both because the rewired speed and kind of performances are on average such that the aerodynamics and lightweight factors are less critical, and because in any case a full reliability and maximum effectiveness of the suspension system prevail over any other demands.

On the other hand, a certain damping capability of the frame is becoming more and more requested also in road racing bikes, that one has to ride on tarmac terrains that are far from being indeed smooth. Furthermore, users are more and more appreciating the possibility to venture, with this same type of bike, in gravel roads or even easy off-road tracks, thanks to a bike that has a special versatility; this type of considerations have led to the recent popularity of the so-called "gravel" bikes. These bikes, but also the vehicles conceived for bikepacking, or the endurance bikes, particularly adapted to give to (even elderly) amateurs the possibility to enjoy long distance rides, find right in their use comfort a key quality that has to be ensured without affecting significantly, or in any case to an unacceptable extent, the speed performance and more generally the efficiency of the vehicle.

In this context it is then fundamental to propose solutions that ensure an appreciable damping function without weighing down the bike or impairing its aerodynamic profile. A solution to which, based on these considerations, some efforts have been directed, is the one which envisages a single-stem suspension housed and in fact concealed inside the steering head tube of the bicycle frame. A disclosure that follows this design concept is that described in patent US5320374. The suspension disclosed therein provides that from the fork there rises an internal steering tube with a polygonal section on the faces of which linear roller bearings are arranged, allowing a telescopic movement in the axial direction between the same tube and a correspondingly internally faceted outer tube segment, in turn revolving, on its external surface, in the steering head tube of the bicycle frame.

This arrangement, with needle bearings arranged on the flat sections between the internal and the outer steering tubes, allows the two tubes to slide freely between them in an axial direction without any significant static friction, but at the same time it has to transmit the torsional steering force from the outer tube to the internal one. The needle bearings therefore support radial loads and maintain an aligned relationship between the two tubes with respect to rotation forces, while allowing the two tubes to slide freely. This freedom of axial movement can therefore be exploited to associate a spring/shock absorber assembly to the system.

This kind of solutions, without considering here their intrinsic efficiency, cause a change to the design context in the fork region, and in particular stimulate the search for fixing arrangement between the steering system and the fork that in any case remain substantially universal (that is, independent from the actual use of a shock absorber system), simple to mount an dismount also in respect to maintenance needs, and capable to ensure the integrity and structural strength of the parts, and especially of the fork.

A known fixing arrangement is for instance the one shown in US2008/0157502, which discloses a steering system for a bicycle, adapted to be arranged within a steering head tube of a frame of said bicycle, said head centrally defining a steering axis, the system comprising a stem engaged in said head coaxially with said axis and externally protruding from the head at least with lower end portion provided with stem fixing means for fixing the stem to a bicycle fork, wherein said stem fixing means comprise: at said lower end portion, a flange fixed with the stem and provided with a stem bottom flat face orthogonal to said axis, adapted to abut on a fork top flat face provided on said fork; a plurality of seats distributed over said flange along a closed path centered on said axis, adapted to receive respective fixing screws to be screwed in respective blind threaded holes; and at least one centering shaft axially protruding form said stem bottom flat face and adapted to become inserted in a corresponding centering cavity formed in said fork top flat face when said stem bottom face stops against said fork top face. This document further discloses a bicycle fork, adapted to be fixed to a steering system comprising a stem extending along a steering axis, said fork comprising fixing means for fixing the fork to a lower end portion of said stem, wherein said fork fixing means comprise a fork top flat face adapted to act as a contact abutment for a bottom face defined on said lower end portion of said stem, orthogonally to said axis, a plurality of holes formed in said fork flat face, adapted to receive respective fixing screws, and at least one centering cavity formed in said fork flat face, adapted to engage with a centering shaft axially protruding from said stem bottom face, when the latter stops against said fork top flat face. In this arrangement a cavity in the fork is made use of, bored centrally in a flat face formed in the same fork, for engagement with a protrusion of a stem of the steering system. The arrangement further comprises fixing screws that act between the same face and a flange associated to the stem. However, among other things, this arrangement affects the ease of the mounting/unmounting operations and weakens the fork, which has to be worked with through holes for the insertion of the screws. The relationship between the stem and the fork is in any case of a slidable nature, and this makes the arrangement not suitable for the generality of the applications. Accordingly, and more generally in consideration of the remarks above in connection with the design context, there is a strong need for different solutions that permit to attain the mentioned requirements, besides to being synergically efficient in case of applications combined with suspension/shock absorber systems inside the steering head tube.

### Summary of the invention

Such a need is responded to by the fixing arrangement according to the invention, having the essential characteristics defined by the first claim here attached. A bicycle fork according to the invention has moreover the characteristics defined by attached claim 10. Further advantageous features of preferred embodiments are defined by the dependent claims.

### Brief description of the drawings

The characteristics and the advantages of the fixing arrangement according to the invention will become apparent from the following description of an embodiment thereof, given as a non-limiting example, with reference to the attached drawings in which:
- figure 1 is a longitudinal cross section view (that is, taken on a plane that contains the longitudinal axis of the device) of a steering head tube in which a suspension system is mounted, an enlargement of the central region being shown in figure 1a;
- figure 2 is a cross section view of the assembly of figure 1, taken cross-wise, and more precisely according to the plane indicated by the arrows II-II in figure 1a, with parts omitted;
- figure 3 is an axonometric and exploded view of a core region comprising in particular a guide of the suspension system of the previous figures; and
- figures 4a and 4b are axonometric views of a connection region between an inner stem of the suspension system and the fork of a bicycle, respectively in a mounting exploded arrangement and in a mounted arrangement.

### Detailed description of the invention

With reference to the above figures, according to an embodiment of the present invention it is envisaged essentially that the sliding of an internal steering tube (or stem) fixed to the fork (the fixing will be discussed hereafter), with respect to the frame head tube - a sliding which is functional to the effect of damped suspension exercised by means of appropriate spring and shock absorber components - and the transmission to the stem of the steering drive, further to a steering torque imparted to an outer sheath, are respective tasks of two functional groups physically distinct from each other (i.e. consecutive) along the steering axis, and cinematically unlinked.

In this embodiment, a suspension system that comprises the outer sheath and the internal stem, which considered together represent a steering column segment inserted in the head tube of the frame, are made integral with respect to rotation - so as to transmit the steering drive from the handlebar to the fork - via a prismatic coupling defined e.g. between a guide sleeve locked to the stem and at least one radial block locked to the sheath; the axial sliding coupling between the components is instead provided by bearing means axially consecutive with respect to the guide sleeve.

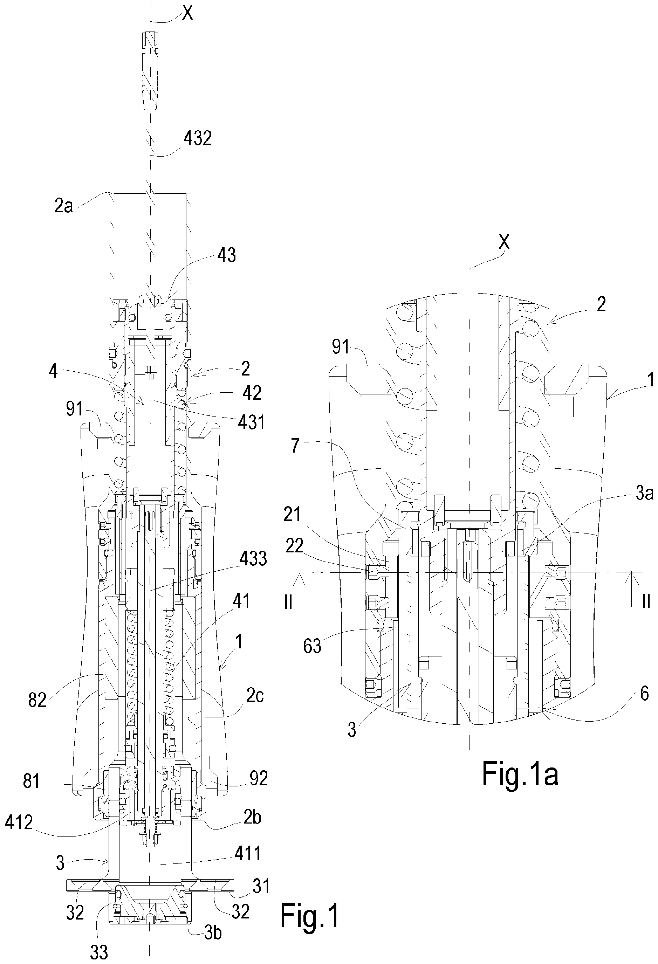

With reference, for the time being, in particular to figures 1 and 1a, the following main components can be noticed:
- a steering head tube 1, that extends according to a central axis X, which represents the steering axis and at the same time the longitudinal axis of the suspension system; the head tube is part of a bicycle frame, not shown and configured according to any known geometry, being it in any case an interface element outside the scope of the invention;
- a suspension system comprising: a tubular sheath 2 and a stem 3, in turn tubular, coaxially arranged the latter inside the former, and the former (i.e. the sheath) inside the head tube 1, all by sharing the common central axis X; and, furthermore, active components 4 operatively arranged between the stem and the sheath, adapted to carry out the function of elastic countering and dampening of the relative axial motion between the two parts just mentioned; these active components 4, which in any case will be briefly described hereafter, does not form part of the invention, this meaning that they can be configured according to features well known and used in the field and that, as will result even clearer from the following description, do not have any significant role in the understanding of the invention and of its enablement.

Going further into detail, the sheath 2 is rotatably coupled (and axially locked) to the head tube 1 through roller bearings 91, 92 of a type similar to that commonly used in known steering systems. A top end 2a of the sheath 2 is connected, again with traditional techniques, a handlebar of the bicycle, not shown and adapted to impart to the sheath the steering torque around the axis X. From the constructive point of view, the sheath 2 is here advantageously manufactured in three axially consecutive portions, connected to each other by threading.

The stem 3 is, as mentioned, mounted to the sheath 2 so as to ensure axial sliding with respect to it, although being secured to it with respect to rotation, to transmit the steering torque to a fork 5 connected to a lower end 3b of the stem, with an arrangement according to an aspect of the invention which will be discussed in detail below. This lower end is external with respect to the sheath, and from a lower end 2b of the sheath the stem protrudes for a segment that in use will be variable according to the excursion imposed on the suspension system.

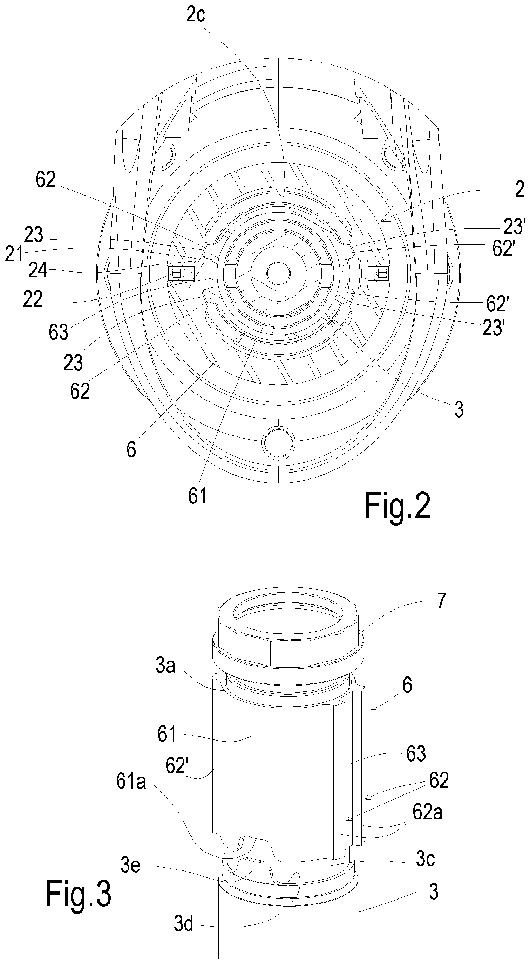

The guide sleeve through which the prismatic coupling is materialized is indicated as a whole with 6 and shown in particular in figure 2. It advantageously provides a substantially cylindrical sleeve body 61, with an outer side surface 61a. At least two first parallel ridges 62 of longitudinal development radially protrude from the side surface 61a, mutually spaced in the circumferential direction to define a groove 63. For obvious reasons of balancing the stresses, at least one further ridge or a further pair of parallel ridges 62' is replicated at least in a diametrically opposite position with respect to that of the first ridges 62.

At least the groove 63 acts as a sliding channel for at least one adjustable block 21 which protrudes radially inwards from an inner side surface 2c of the sheath. This block 21 is connected to the sleeve through connection means which allow the adjustment of the radial penetration of the block itself inside the groove 63. For example and preferably at least one adjusting set screw 22 can be provided, to which the screwing rotation can be impressed from the outside of the sheath, the radial movement of the block responding to such rotation. This adjustment can be used to optimize the sliding friction and the steering precision, during assembly or maintenance, also to recover some play that can be generated as a result of wear. Again advantageously, the cross sections of the groove and of the block, mutually matching with each other, as shown in figure 3, may have side faces that converge to some extent in a wedge fashion.

Still in a preferred solution, that can be well understood especially from figure 2, radial end facets 62a of the first ridges 62 (and likewise of the further possible ridges 62') act as radial stop and reference for corresponding radial end facets of ridges 23 (and 23') projecting in a corresponding and mirrored fashion and position from the inner side surface 2c of the sheath 2. The ridges 23 also define at least one groove 24 within which the block 21 is housed. In the example here shown, there are two pairs of ridges facing each other between the sleeve and sheath, one of which serves to the operative arrangement of the sliding block 21.

The sleeve 6 is axially locked to the outer side surface 3c of the stem 3, as shown in figure 3, at an upper end region 3a of the stem itself, between a step 3d and a blocking ring nut 7. The step 3d develops also according to at least one axial tooth 3e that, by engaging with a corresponding axial cutout 61a of the sleeve 6, prevents the latter from rotating around the axis X.

The linear/axial sliding coupling between the stem 3 and the sheath 2 is provided (figure 1) by first and second linear bearing means 81, 82 arranged at different heights, and in particular at the lower end 2b of the sheath 2 and at a certain distance above, adjacent to the sleeve 6. Advantageously a lower bearing 81 with sliding friction and an upper recirculating ball bearing 82 are provided.

In the embodiment previously described, from an operative point of view, a sure block against the mutual rotation is provided by the engagement between the block and the guide sleeve, permitting the transfer to the stem of the steering torque imparted to the sheath, and at the same time a reciprocating linear movement between such components, supported by the two linear bearings, with outstanding smoothness and precision, this second merit being in particular due to the spacing of the bearings that effectively constrain the stem, preventing significant flexion deformations. The fact that the two mentioned functions are not only cinematically unlinked thanks to components that are distinct and separated along the X axis, but also and in particular through first and second linear bearing means that are axially consecutive with respect to the prismatic coupling means, permits then to attain a particularly balanced force field that at the same time enhances the performance and durability of the system, obtaining remarkable improvements also as far as the ease of mounting and maintenance is concerned, considering that, among other things, it is possible to easily disengage the sleeve from the stem, and actually dismount the whole suspension to replace worn out or damaged components.

Returning briefly, for the sake of completeness, to the active components 4, these can comprise, as in the example and always with specific reference to figure 1 in which the stem is in the position of maximum external excursion: a hydraulic damping group 41 provided inside the stem, which uses a chamber 411 occupied by a viscous fluid (oil) within which the relative movement of a piston 412, secured to the sheath, is allowed (but damped) by the effect of the transfer of fluid through controlled passages provided on the piston itself; a main spring 42 arranged within the sheath in the upper part not occupied by the stem, and stressed by the excursion stroke of the stem itself, the spring being accessible by removing the components mounted above it to modify its static preload or to replace it with another of different stiffness; a group 43 for exclusion or calibration of damping group 41, again extending inside the stem-sheath assembly between the same group 41 and the upper part of the sheath, and comprising a small gear motor 431 powered by a cable 432 for connection to a control unit control (typically on the bicycle handlebar) and able to exert a selective shutting action on the piston passages by means of a rotating rod 433, until the stem/sheath excursion is blocked - if desired - and the function of suspension is in practice disabled. All these components, or other equivalent or even of different performances, can be adopted and adapted on the basis of known technical teachings, this adaptation being by no means affected by any particular problem posed by the specific aspects of the present invention. These known teachings obviously include the constructional arrangements for the various hydraulic seals, not only with respect to the fluid of the damping system, but also imposed by lubrication requirements.

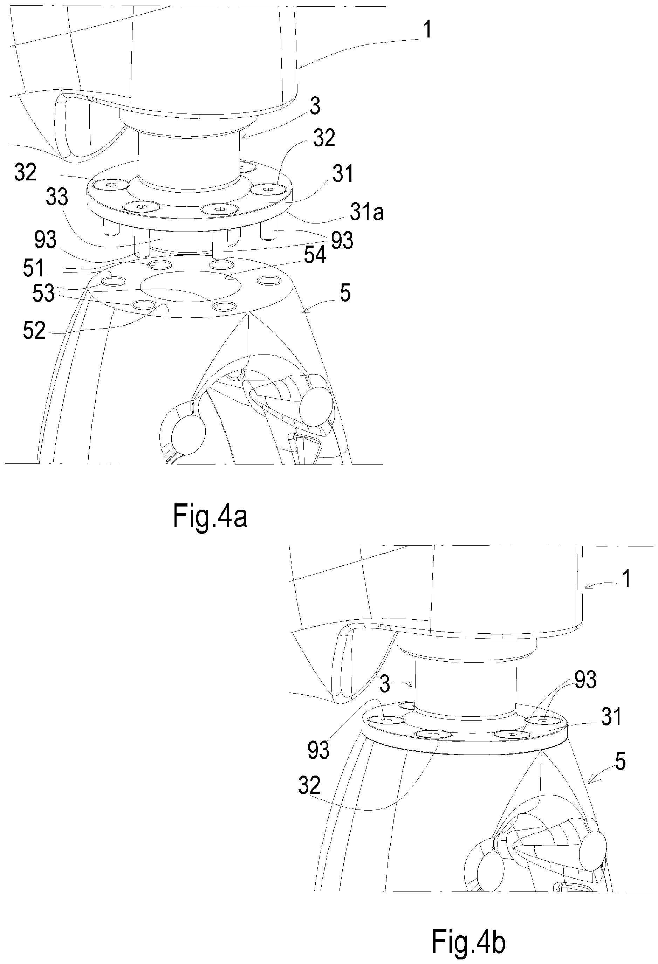

The main aspect of the invention relates to the connection of the lower end 3b of the stem 3 to the fork 5 and has a synergic effect in combination with the embodiment referred to above, but can advantageously be applied even independently from it, i.e. to a stem also otherwise coupled with the head tube 1. With particular reference to figures 4a and 4b, the stem at the lower end 3b is shaped according to a disc-shaped flange 31, comprising a bottom flat face 31a which extends orthogonally to the axis X. A plurality of flared seats 32 are formed in the flange, arranged in a crown preferably in an equally spaced manner along a closed path, such as a circular one centered on the axis X. The seats are for example and preferably in a number of six, and adapted to receive the heads of respective fixing screws 93 arranged parallel to the axis. The screws are for example and preferably of size M5.

The screws 93 are adapted to be engaged in threaded holes 51 formed with a suitable distribution that corresponds to that of the seats of the flange, at the top of the fork 5, more precisely on a to flat face 52 providing abutment to the bottom flat face 31a of the flange 31. The holes 51 therefore open at the top flat face 52 and are blind. The fork, according to commonly used techniques, can be made of typical materials such as steel, aluminum or carbon fiber. If the fork is made of carbon fiber, the threaded holes 51 are preferably made of aluminum inserts 53, embedded in the matrix during the piece lamination working.

On the top flat face of the fork at least one centering cavity 54 is provided, preferably a single large circular hole in a central position with respect to the distribution of holes 51, for the engagement of at least one corresponding centering shaft 33 (figure 4a) that the stem 3 forms as an axial protrusion from the bottom face 31a of the flange 31, this engagement being established when the flange is in stop abutment with its bottom face 31a on the flat face 52. Advantageously, the stem body, the flange and the shaft are obtained in one integral piece; in any case, these components, and in particular the stem and the flange, are fixed together in a locked relationship.

The shaft 33, besides to having the centering task, internally houses some of the active components mentioned above, in particular the lower part of the hydraulic chamber 411, so as to exploit and optimize the available spaces as far as possible.

The connection/fixing obtained in this way ensures a perfect mounting accuracy, with easy assembling operation of the parts, with no need for a set-up, and remarkable stress and stiffness of the engagement, engagement that actually makes the fork fixed with respect to the flange, in turned fixed with respect to the stem. A full integration of the suspension in the frame-fork module is accomplished, permitting to obtain a high structural solidity in lightweight components, the arrangement remaining though substantially universal, that is applicable also in the context of a system that does not use an integrated suspension. The holes 51, for the insertion of the screw from above, do not need to be through holes and a weakening of the fork is in this way avoided.

To summarize, it will be appreciated how, according to the invention, there is provided a solution that ensures full integration inside a steering head tube of a compact and functional arrangement, likewise achieving high levels of precision, reduced friction, ease of mounting and maintenance.

The present invention has been so far described with reference to its preferred embodiments. It has to be understood that other embodiments may exist which belong to the same inventive concept as defined by the scope of the protection of the claims here enclosed.

## Claims

1. A steering system for a bicycle, the steering system adapted to be arranged within a steering head tube (1) of a frame of said bicycle, said steering head tube (1) centrally defining a steering axis (X), the steering system comprising a stem (3) engaged in said steering head tube (1) coaxially with said axis (X) and externally protruding from the steering head tube (1) at least with a lower end portion (3a) provided with stem fixing means for fixing the stem to a bicycle fork (5), wherein said stem fixing means comprise: at said lower end portion (3a), a flange (31) fixed with the stem and provided with a stem bottom flat face (31a) orthogonal to said axis (X), adapted to abut on a fork top flat face (52) provided on said fork (5); a plurality of seats (32) distributed over said flange along a closed path centered on said axis (X), adapted to receive heads of respective fixing screws (93) to be screwed in respective blind threaded holes (51) that open at said fork top flat face (52); and at least one centering shaft (33) axially protruding from said stem bottom flat face (31a) and adapted to become inserted in a corresponding centering cavity (54) formed in said fork top flat face (52) when said stem bottom face (31a) stops against said fork top face (52).

2. The system according to claim 1, wherein said seats (32) of said flange (31) are equally spaced along a substantially circular path.

3. The system according to claim 2, wherein said seats (32) are six in number.

4. The system according to any of the previous claims, wherein said seats (32) are countersunk alike the heads of the respective screws (93).

5. The system according to any of the previous claims, wherein said flange (31) is disk-shaped.

6. The system according to any of the claims 2 or 3, wherein said at least one centering shaft (33) is a single shaft arranged at the center of said substantially circular path, and is adapted to become engaged in said centering cavity (54) centrally formed in said fork top flat face (52).

7. The system according to any of the previous claims, wherein said centering shaft (33) is hollow and houses part of active components (4).

8. The system according to any of the previous claims, wherein said flange (31) and said centering shaft (33) are obtained in a single piece with a body of said stem (3).

9. The system according to claim 7, wherein said stem (3) is slidable along said axis (X), the system further comprising said active components (4) operatively associated with said stem (3) to carry out the function of elastic countering and dampening of the axial motion of the stem (3) relative to the steering head tube (1).

10. A bicycle fork (5), adapted to be fixed to a steering system comprising a stem (3) extending along a steering axis (X), said fork (5) comprising fixing means for fixing the fork (5) to a lower end portion (3a) of said stem (3), wherein said fork fixing means comprise a fork top flat face (52) adapted to act as a contact abutment for a bottom face (31a) defined on said lower end portion of said stem (3), orthogonally to said axis (X), a plurality of blind threaded holes (51) formed in said fork flat face (52), adapted to receive respective fixing screws (93), and at least one centering cavity (54) formed in said fork flat face (52), adapted to engage with a centering shaft (33) axially protruding from said stem bottom face (31a), when the latter stops against said fork top flat face (52).

11. The fork (5) according to claim 10, wherein said blind threaded holes (51) are equally spaced along a substantially circular path.

12. The fork (5) according to claim 11, wherein said blind threaded holes (51) are six in number.

13. The fork (5) according to claim 11 or 12, wherein said at least one centering cavity (54) is a single cavity arranged at the center of said substantially circular path.

14. The fork (5) according to any of the claims 10 to 13, made of carbon fiber, wherein said blind threaded holes (51) are formed in inserts (53) and of aluminum, sunk in the carbon fiber during the fork lamination step.

15. A bicycle comprising a system according to any of the claims 1 to 9 and a fork (5) according to any of the claims 10 to 14.

## Patentansprüche

1. Ein Lenksystem für ein Fahrrad, wobei das Lenksystem dazu vorbereitet ist, im Inneren eines Steuerkopfrohrs (1) eines Fahrradrahmens angeordnet zu werden, wobei das besagte Steuerkopfrohr (1) eine zentrale Lenkerachse (X) umgibt, wobei das Lenksystem einen Lenkerschaft (3) aufweist, der in das besagte Steuerkopfrohr (1) koaxial zu der besagten Achse (X) hineingreift und zumindest mit einem unteren Endbereich (3a) aus dem Steuerkopfrohr (1) nach außen ragt, wobei der untere Endbereich (3a) mit Lenkerschaftfixierungsmittel zum Festlegen des Lenkerschaftes an einer Fahrradgabel (5) versehen ist, wobei das besagte Lenkerschaftfixierungsmittel umfasst: An dem besagten unteren Endbereich (3a) einen Flansch (31), der an dem Lenkerschaft festgelegt ist und mit einer flachen Lenkerschaftunterseite (31a) versehen ist, die orthogonal zu der besagten Achse (X) ist, welche dazu vorbereitet ist, an einer flachen Fahrradgabeloberseite (52) anzuliegen, die an der besagten Fahrradgabel (5) vorgesehen ist; eine Mehrzahl von Aufnahmen (32), die über den besagten Flansch entlang einer geschlossenen, an der besagten Achse (X) zentrierten Bahn verteilt sind, welche Aufnahmen (32) dazu geeignet sind, Köpfe von Befestigungsschrauben (93) aufzunehmen, welche in zugeordnete Gewindesacklöcher (51) eingeschraubt werden, welche an der besagten flachen Fahrradgabeloberseite (52) offen sind; und wenigstens eine Zentrierwelle (33), die von der besagten flachen Lenkerschaftunterseite (31a) axial herausragt und dazu vorbereitet ist, in einen zugeordneten Zentrierungshohlraum (54) in der besagten flachen Fahrradgabeloberseite (52) eingesetzt zu werden, wenn die besagte flache Lenkerschaftunterseite (31a) an der besagten flachen Fahrradgabeloberseite (52) anschlägt.

2. Das System gemäß Anspruch 1, wobei die besagten Aufnahmen (32) des besagten Flansches (31) entlang einer substantiell kreisförmigen Bahn gleichmäßig beabstandet sind.

3. Das System gemäß Anspruch 2, wobei die besagten Aufnahmen (32) sechs an der Zahl sind.

4. Das System gemäß einem der vorhergehenden Ansprüche, wobei die besagten Aufnahmen (32) ähnlich wie die Köpfe der entsprechenden Schrauben (93) eingesenkt sind.

5. Das System gemäß einem der vorhergehenden Ansprüche, wobei der besagte Flansch (31) scheibenförmig ist.

6. Das System gemäß einem der Ansprüche 2 oder 3, wobei die besagte, wenigstens eine Zentrierwelle (33) eine einzelne Welle ist, die im Zentrum der besagten, substantiell kreisförmigen Bahn angeordnet sowie dazu ausgelegt ist, in den besagten Zentrierungshohlraum (54) eingefügt zu werden, welcher in der besagten, flachen Fahrradgabeloberseite (52) mittig eingeformt ist.

7. Das System gemäß einem der vorhergehenden Ansprüche, wobei die besagte Zentrierwelle (33) hohl ist und einen Teil der aktiven Bestandteile (4) aufnimmt.

8. Das System gemäß einem der vorhergehenden Ansprüche, wobei der besagte Flansch (31) und die besagte Zentrierwelle (33) zusammen mit dem Gehäuse des besagten Lenkerschaftes (3) in einem einzigen Teil hergestellt werden.

9. Das System gemäß Anspruch 7, wobei der besagte Lenkerschaft (3) entlang der besagten Achse (X) verschiebbar ist, wobei das System ferner die besagten aktiven Bestandteile (4) aufweist, welche dem besagten Lenkerschaft (3) wirkungsmäßig zugeordnet sind, um die Funktion einer elastischen Konterung und Dämpfung der axialen Bewegung des Lenkerschaftes (3) gegenüber dem Steuerkopfrohr (1) auszuführen.

10. Eine Fahrradgabel (5), die dazu geeignet ist, an einem Lenksystem befestigt zu werden, welches einen Lenkerschaft (3) umfasst, der sich entlang einer Lenkachse (X) erstreckt, wobei die besagte Fahrradgabel (5) Fixierungsmittel zum Festlegen der Fahrradgabel (5) an einem unteren Endbereich (3a) des besagten Lenkerschaftes (3) umfasst, wobei die besagten Fixierungsmittel für die Fahrradgabel eine flache Fahrradgabeloberseite (52) aufweisen, die dazu ausgelegt ist, als eine Kontaktanlagefläche für eine Unterseite (31a) zu dienen, die an dem besagten unteren Endbereich des besagten Lenkerschaftes (3) orthogonal zur besagten Achse (X) angeordnet ist, sowie eine Mehrzahl von Gewindesacklöchern (51), die in der besagten flachen Fahrradgabeloberseite (52) eingeformt und dazu geeignet sind, zugeordnete Befestigungsschrauben (93) aufzunehmen, wobei wenigstens ein Zentrierungshohlraum (54), die in der besagten flachen Gabeloberseite (52) eingeformt ist, um mit einer Zentrierwelle (33) in Eingriff zu gelangen, die von der besagten Lenkerschaftunterseite (31a) axial herausragt, wenn die letztere an der besagten flachen Fahrradgabeloberseite (52) anschlägt.

11. Die Gabel (5) gemäß Anspruch 10, wobei die besagten Gewindesacklöcher (51) entlang einer substantiell kreisförmigen Bahn gleichmäßig beabstandet sind.

12. Die Gabel (5) gemäß Anspruch 11, wobei die besagten Gewindesacklöcher (51) sechs an der Anzahl sind.

13. Die Gabel (5) gemäß Anspruch 11 oder 12, wobei der besagte, wenigstens eine Zentrierungshohlraum (54) ein einzelner Hohlraum ist, der in der Mitte der besagten, substantiell kreisrunden Bahn angeordnet ist.

14. Die Gabel (5) gemäß einem der Ansprüche 10 bis 13, hergestellt aus Carbonfaser und aus Aluminium, das in die Carbonfasern während der Laminierung der Gabel getaucht wurde, wobei die besagten Gewindesacklöcher (51) in Einsätzen geformt sind.

15. Ein Fahrrad, umfassend ein System gemäß einem der Ansprüche 1 bis 9 und eine Gabel (5) gemäß einem der Ansprüche 10 bis 14.

## Revendications

1. Système de direction pour un vélo, le système de direction étant adapté pour être agencé dans un tube de direction (1) d'un cadre dudit vélo, ledit tube de direction (1) définissant, centralement, un axe de direction (X), le système de direction comprenant une potence (3) mise en prise dans ledit tube de direction (1), de manière coaxiale, avec ledit axe (X), et faisant, extérieurement, saillie du tube de direction (1) au moins avec une partie d'extrémité inférieure (3a) prévue avec des moyens de fixation de potence pour fixer la potence sur une fourche (5) de vélo, dans lequel lesdits moyens de fixation de potence comprennent : au niveau de ladite partie d'extrémité inférieure (3a), une bride (31) fixée avec la potence et prévue avec une face plate inférieure de potence (31a) orthogonale audit axe (X), adaptée pour venir en butée contre une face plate supérieure de fourche (52) prévue sur ladite fourche (5) ; une pluralité de sièges (32) répartis sur ladite bride le long d'une trajectoire fermée, centrée sur ledit axe (X), adaptés pour recevoir des têtes des vis de fixation (93) respectives à visser dans des trous filetés aveugles (51) respectifs qui s'ouvrent au niveau de ladite face plate supérieure de fourche (52) ; et au moins un arbre de centrage (33) faisant axialement saillie de la face plate inférieure de potence (31a) et adapté pour être inséré dans une cavité de centrage (54) correspondante formée dans ladite face plate supérieure de fourche (52) lorsque ladite face inférieure de potence (31a) s'arrête contre ladite face supérieure de fourche (52).

2. Système selon la revendication 1, dans lequel lesdits sièges (32) de ladite bride (31) sont espacés à égale distance le long d'une trajectoire sensiblement circulaire.

3. Système selon la revendication 2, dans lequel lesdits sièges (32) sont au nombre de six.

4. Système selon l'une quelconque des revendications précédentes, dans lequel lesdits sièges (32) sont contre-alésés comme les têtes des vis (93) respectives.

5. Système selon l'une quelconque des revendications précédentes, dans lequel ladite bride (31) est en forme de disque.

6. Système selon l'une quelconque des revendications 2 ou 3, dans lequel ledit au moins un arbre de centrage (33) est un arbre unique agencé au centre de ladite trajectoire sensiblement circulaire, et est adapté pour être mis en prise dans ladite cavité de centrage (54) formée de manière centrale dans ladite face plate supérieure de fourche (52).

7. Système selon l'une quelconque des revendications précédentes, dans lequel ledit arbre de centrage (33) est creux et loge une partie des composants actifs (4).

8. Système selon l'une quelconque des revendications précédentes, dans lequel ladite bride (31) et ledit arbre de centrage (33) sont obtenus d'un seul tenant avec un corps de ladite potence (3).

9. Système selon la revendication 7, dans lequel ladite potence (3) peut coulisser le long dudit axe (X), le système comprenant en outre lesdits composants actifs (4) associés, de manière opérationnelle, avec ladite potence (3) pour réaliser la fonction de l'opposition élastique et d'amortissement du mouvement axial de la potence (3) par rapport au tube de direction (1).

10. Fourche (5) de vélo adaptée pour être fixée à un système de direction comprenant une potence (3) s'étendant le long d'un axe de direction (X), ladite fourche (5) comprenant des moyens de fixation pour fixer la fourche (5) à une partie d'extrémité inférieure (3a) de ladite potence (3), dans laquelle lesdits moyens de fixation de fourche comprennent une face plate supérieure de fourche (52) adaptée pour servir de butée de contact pour une face inférieure (31a) définie sur ladite partie d'extrémité inférieure de ladite potence (3), de manière orthogonale audit axe (X), une pluralité de trous filetés borgnes (51) formés dans ladite face plate de fourche (52), adaptés pour recevoir des vis de fixation (93) respectives, et au moins une cavité de centrage (54) formée dans ladite face plate de fourche (52), adaptée pour se mettre en prise avec un arbre de centrage (33) faisant axialement saillie de ladite face inférieure de potence (31a), lorsque cette dernière s'arrête contre ladite face plate supérieure de fourche (52).

11. Fourche (5) selon la revendication 10, dans laquelle lesdits trous filetés borgnes (51) sont espacés à égale distance le long d'une trajectoire sensiblement circulaire.

12. Fourche (5) selon la revendication 11, dans laquelle lesdits trous filetés borgnes (51) sont au nombre de six.

13. Fourche (5) selon la revendication 11 ou 12, dans laquelle ladite au moins une cavité centrale (54) est une cavité unique agencée dans le centre de ladite trajectoire sensiblement circulaire.

14. Fourche (5) selon l'une quelconque des revendications 10 à 13, réalisée à partir de fibres de carbone, dans laquelle lesdits trous filetés borgnes (51) sont formés en inserts (53) et avec de l'aluminium, fraisés dans les fibres de carbone pendant l'étape de stratification de fourche.

15. Vélo comprenant un système selon l'une quelconque des revendications 1 à 9 et une fourche (5) selon l'une quelconque des revendications 10 à 14.
